# EUROPEAN PATENT APPLICATION

(11) **EP 1 205 714 A2**
(43) Date of publication of application: **15.05.2002**
(21) Application number: 01119911.4
(22) Date of filing: 17.08.2001
(51) Int. Cl.: F24C 15/20

(54) **Smoke exhausting device**

(30) Priority: 09.11.2000 JP 2000342457
(71) Applicant: Lee, Mong-Yu, Kaohsiung Hsien (TW)
(72) Inventor: Lee, Mong-Yu, Kaohsiung Hsien (TW)
(74) Representative: Cederbom, Hans Erik August

(57) **Abstract**

To provide a smoke exhausting device which can remove smoke or odor in suction sir completely and is simplified the maintenance. A suction chamber 11 provided injection nozzles 72, 72 communicated with an inlet port 12 is communicated with the reservoir 40 (40a, 40b) through the communicating duct 20 then a screen 15 wherein roughness of the openings or meshes is enough to be formed a film sealing the openings or meshes by water sprayed with the injection nozzle 74, 74 is disposed. In addition, a ventilator 90 sucking air in the reservoir 40 through the exhaust suct 30 which opened below at an upper position of a surface of fluid of said reservoir 40 is provided.

## Description

### BACKGROUND OF THE INVENTION

### 1. Field of the Invention

The present invention relates to a smoke exhausting device sucking air including smoke or odor generated by heating or cooking the food or the like then exhausting smoke or odor for example to the outdoors.

### 2. Description of the Related Art

Up to now, when meat or the like is cooked with a roaster or a cooking stove in a restaurant, a kitchen or a dining room or the like in a home, smoke or odor generated by the cooking fills the restaurant or the room and makes decorations such as walls or curtains or the like dirty in the restaurant or the room, then adheres to clothes or hairs which makes an unpleasant feeling to people in the room. To prevent the room from being filled with smoke or odor, a ventilator is installed in a suitable place in the restaurant or the room then air in the room is ventilated, or, smoke or odor is sucked by an exhausting device of which the main body of a food processing means and the exhausting device connected with a duct or the like then discharged to the outdoors forcibly, or smoke or odor or the like in exhaust is removed by a dust collector assembled in the food processing means directly.

### SUMMARY OF THE INVENTION

In the conventional smoke exhausting device previously mentioned has problems, as follows; For example, on the method for exhausting smoke or odor by a duct, a complicated installation is required for connecting each ventilating hole arranged on a roaster with a duct and guiding exhaust to the outdoors, thereby the cost for establishing an installation becomes expensive. In addition water or grease is accumulated in the duct corrodes, furthermore, there is possibility the accumulated grease ignites then it causes a fire, therefore, safety is lucked. Since grease in the exhaust is adhered on the ventilator it is required to clean a ventilator of an exhausting device frequently. If the ventilator is remained unclean, there remains problems such as grease adhered on the ventilator is scattered when rotating of the ventilator, or it makes rotating speed of the ventilator extremely slowly, and therefore, function of a ventilator is not fulfilled.

On the food processing means with exhaust function installing the dust collector in the main body of the food processing means directly, enough efficiency for removing exhaust can not be obtained and above mentioned problem caused by exhausting smoke is not solved completely, because hot air of which the smoke is not removed completely is exhausted in the restaurant or in the room. In case the smoke exhausting device is provided on the food processing means directly, it is complicated because not only the food processing means but also the smoke exhausting device should be changed when the food processing means is exchanged, furthermore, it is hard to disassemble, repair and clean or the like.

The invention has been made to solve the above problems, and an object thereof is to provide a smoke exhausting device wherein air including smoke or odor generated by cooking can be exhausted as clean air of which smoke or odor is removed, the duct of the ventilator or the like formed therein is hard to be dirtied with oil film or the like and a cleaning by disassembly or the like is simplified.

To achieve the above object, the smoke exhausting device 1 of the present invention is characterized in that: a suction chamber 11 communicated to an inlet port 12 and equipped with injection nozzles 74, 74 spraying fluid suction medium (for example, water)for sucking smoke or odor in air, and a reservoir tank 40 (40a, 40b) is/are provided which is/are communicated to the bottom of the suction chamber 11, reserving the suction medium sprayed form said injection nozzles 74, 74 and introducing air passed through said chamber 11 therein, a screen 15 of which numerous small openings are formed thereon divides between said suction chamber 11 and said reservoir 40 (40a, 40b) and an exhaust duct 30 exhausting air in said reservoir tank 40 (40a, 40b) by being connected with a ventilator 90 is located and opened above a surface of the fluid in said reservoir tank 40 (40a, 49b), and the smoke exhausting device further comprising: the connecting chamber 60 is formed by extending the lower end of said suction chamber 11 to an upper surface 42 of said reservoir tank 40 (40a, 40b), and the inside of the connecting chamber 60 is defined with a partition 31 comprising of plural vertical portions 31b, 31b and a top portion 31a connecting between the upper ends of said vertical portion 31b, 31b, and a space surrounded by said partition 31 is provided as said exhaust duct 30, and the communicating duct 20 is formed so as to communicate between said suction chamber 11 and said reservoir 40 (40a, 40b) by the other portions in said connecting chamber 60.

On the smoke exhauster 1 having the exhaust duct 30 and the communicating duct 20 formed as mentioned above, it is preferable that a top portion 31a of said partition 31 is inclined downwardly to said communicating duct 20. It is also preferable that a vertical portion 31b of said partition 31 is extended downwardly and protruded in said reservoir 40 (40a, 40b). In addition, a gutter not shown may be provided on the top portion 31 a of said partition 31 and the gutter of which inclined downwardly to said communicating duct 20 for guiding the fluid suction medium. On the smoke exhausting device 1 of the mentioned above, it is preferable that each of a suction unit 10 which defines said suction chamber 11, said reservoir tank 40 (40a, 40b), a communicating duct 20 communicating between said suction chamber 11 and said reservoir 40 (40a, 40b) and of said exhaust duct 30 are formed as decomposable independent members.

In case the above mentioned each parts are formed as decomposable independent members, a smoke exhausting device 1 may be formed by selecting, for example, said communicating duct 20 among plural kinds of the same whose length is varied according to the arrangement height of said suction unit 10. A plurality of said suction units 10a, 10b may be arranged longitudinally by combining each part. In addition, said communicating duct 20 is divided with a screen 25 of which numerous small openings are formed thereon into the upper and lower spaces, preferably, the injection nozzle 75 spraying the fluid suction medium in said communicating duct 20 may be provided on the upper space of said screen 25 dividing said communicating duct 20.

### BRIEF DESCRIPTION OF THE DRAWINGS

The object and advantages of the invention will become understood from the following detailed description of preferred embodiments thereof in connection with the accompanying drawings in which like names designate like elements, and in which:
- FIG 1: is a perspective view of the smoke exhausting device in accordance with the present invention;
- FIG 2: is a necessary portion cross sectional perspective view of the present invention;
- FIG 3: is a cross sectional view taken on line III-III of FIG 2;
- FIG 4: is an exploded view of another smoke exhausting device of the present invention;
- FIG 5: is a perspective view of assembly of the smoke exhausting device of FIG 4;
- FIG 6: is a perspective view of right-side of the smoke exhausting device of FIG 4;
- FIG 7: is an exploded view of the other smoke exhausting device of the present invention;
- FIG 8: is a perspective view of assembly of the smoke exhausting device of FIG 7;
- FIG 9: is a front view of the other smoke exhausting device of the present invention;
- FIG 10: is a right-side view of the smoke exhausting device of which an arrangement angle of a suction unit is adjustable;
- FIG 11: is a right-side view of the smoke exhausting device of which the suction unit is inclined.

### DETAILED DESCRIPTION OF THE PREFERRED EMBODIMENT

Referring to attached drawings, embodiments of the present invention will now be described below.

### Embodiment 1

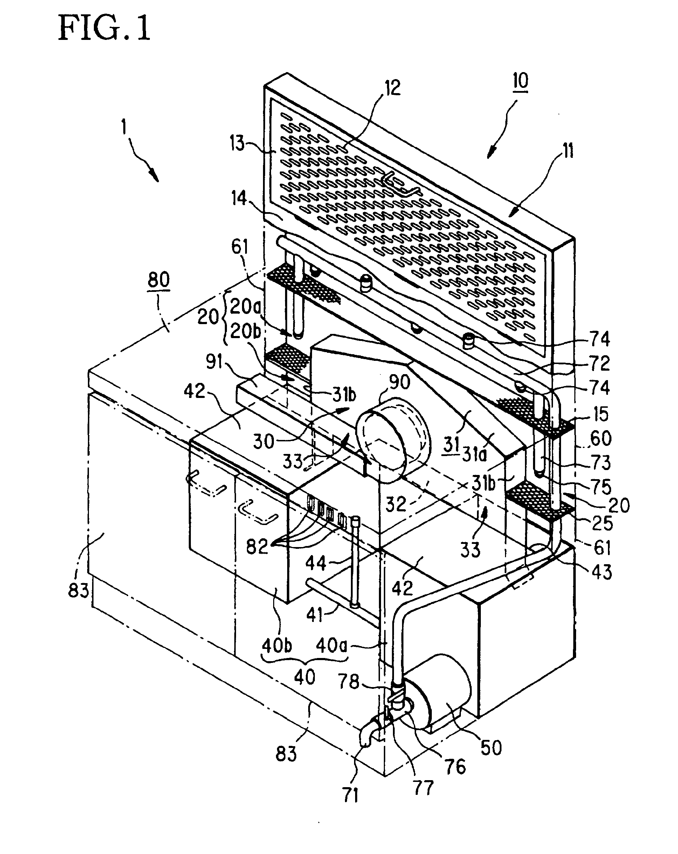

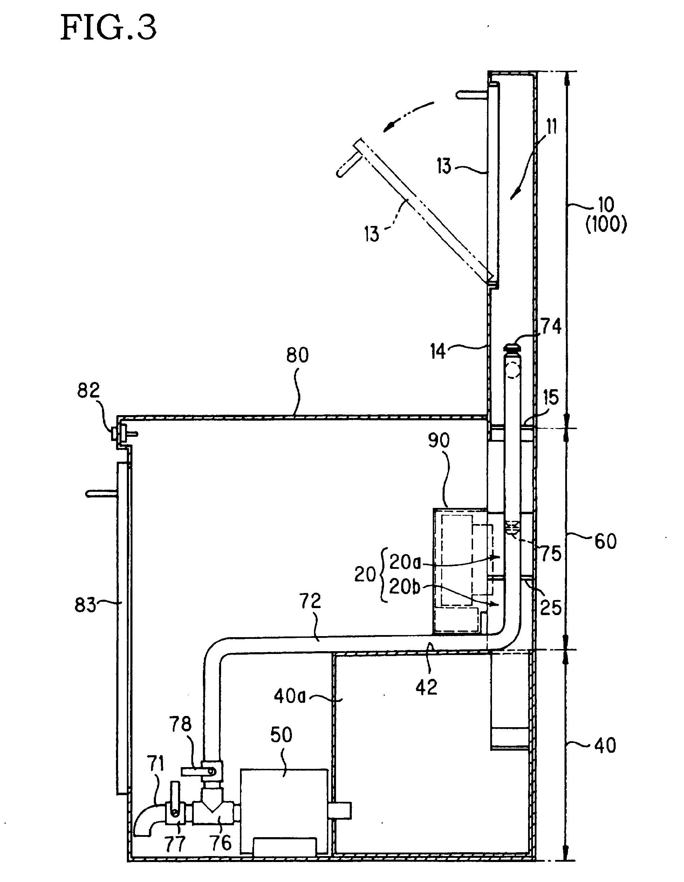

Referring to FIG 1 to 3, an embodiment of the smoke exhausting device 1 of the present invention will now be described. Referring to FIG 1, numeral 1 is a smoke exhausting device of the present invention, the smoke exhausting device 1 is equipped with a suction unit 10, a reservoir tank 40 located below the suction unit 10, a suction chamber 11 formed in said suction unit 10, a communicating duct 20 communicating to said reservoir tank 40, an exhaust duct 30 communicated to a ventilator 90 exhausting air in said reservoir tank 40 for example to the outdoors, a storage pump 50 pumping the fluid suction medium reserved in said reservoir tank 40 then supplying the same to injection nozzles 74, 74 ... disposed in said suction chamber 11, and a conduit 72.

### A suction unit

Said suction unit 10 defines the suction chamber 11 in which air including smoke or odor is introduced through an inlet port 12 and the injection nozzle 74 spraying water in the suction chamber 11 is disposed, thereby smoke or odor in inhaled air is sucked then removed in water sprayed in said suction chamber 11. Said injection nozzle 74 disposed in the suction unit 10 sprays the fluid suction medium i.e., water in the present embodiment reserved in the reservoir tank 40 mentioned later and the injection nozzle 74 is communicated to the conduit 72 communicated to the storage pump 50 pumping water reserved in the reservoir tank 40. In addition, in the embodiment, the fluid suction medium is explained as "water", however, any fluid other than water may be used if it is able to suck smoke or odor, furthermore, a surfactant or the like may be added to water for washing grease or the like adhered in the smoke exhausting device 1, therefore the fluid suction medium is not restricted to the following embodiment.

In this embodiment, the suction unit 10 is formed into a thin box shape whose thickness is about 50 mm, and a suction chamber 11 is provided therein and upper two thirds of a opposite side composed as an aperture 13 comprised of a punching metal or a wire netting then each aperture formed on the aperture 13, facing to an fixed position of the food processing means, is so constructed as the inlet port 12 communicated into the suction chamber 11. A portion without formed an inlet port 12 in said suction unit 10, i.e., a portion covered with a front plate 14 at the lower portion of the aperture 13 referring to the embodiment shown in FIG 1, a conduit 72 connected with the storage pump 50 mentioned later is disposed in a lateral direction in the suction unit 10 and injection nozzles 74, 74 are installed in the conduit 72 at suitable distance, thereby enabled to spray water in the suction chamber 11.

Numeral 15 in FIG 1 is a screen comprising of a punching metal or a wire netting or the like dividing a lower end of the suction chamber 11 formed in said suction unit 10. Preferably, in the screen 15, openings or meshes having enough roughness of which water sprayed with the injection nozzle 74, 74 can form a film sealing the openings or meshes of the screen 15 then when air is transferred from the suction chamber 11 to the reservoir 40 mentioned later, smoke or odor or the like remained in air is passed and collected through the water film formed on the screen 15, thereby only removed clean air is introduced in the reservoir tank 40.

### A reservoir tank

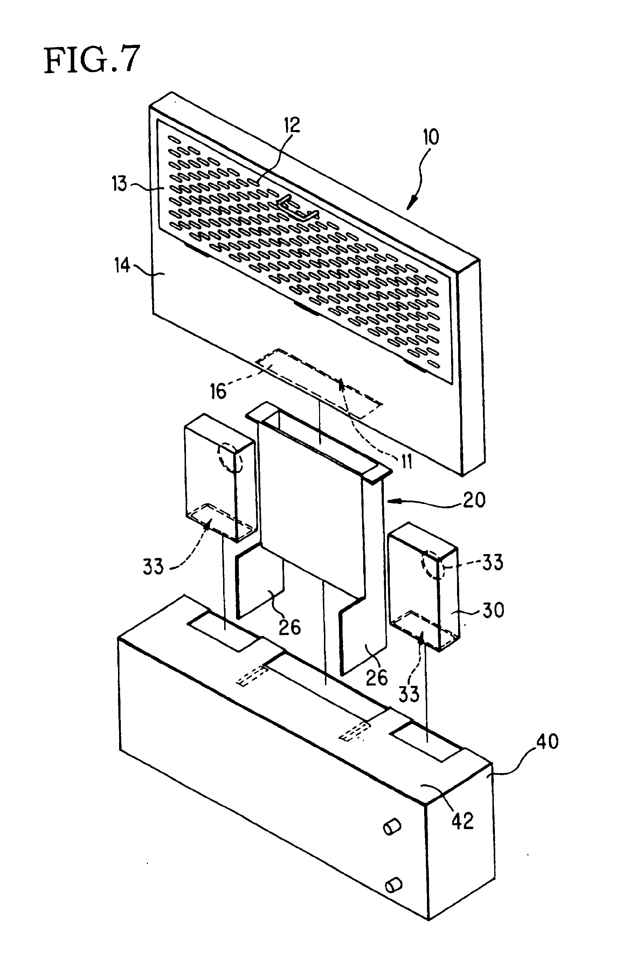

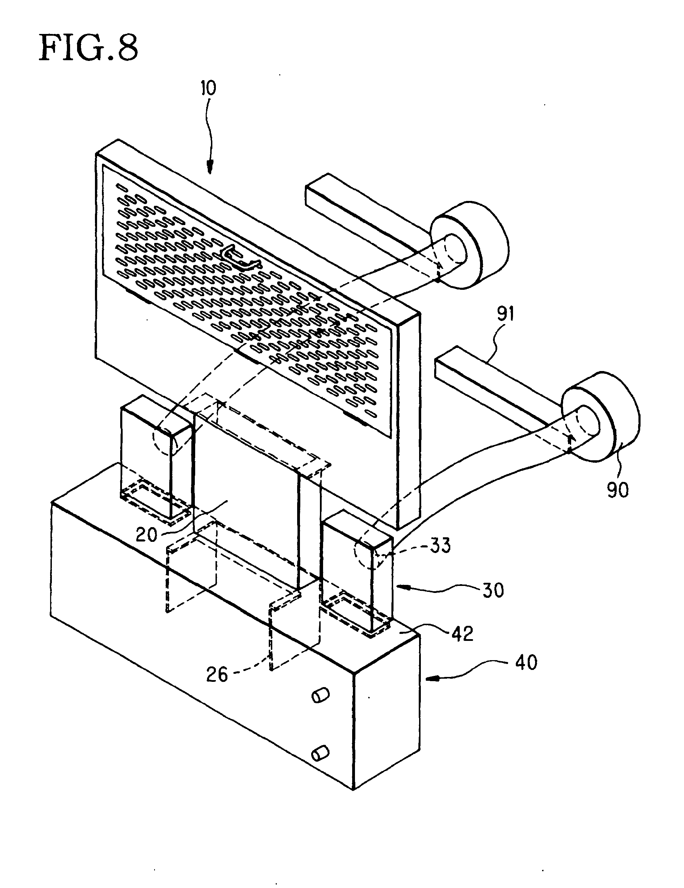

The suction chamber 11 of the suction unit 10 constituted as mentioned above is communicated with the reservoir through the screen 15 dividing the lower end of the suction chamber 11. In an embodiment shown in FIG 1, the reservoir tank 40 is formed by disposing two tanks 40a, 40b on right and left separately at a predetermined distance, however, as shown in FIG 7 and FIG 8, the reservoir tank 40 may be formed as a united one without separating. Therefore, the shape of the reservoir tank 40 is not restricted to the one shown in FIG 1. In addition, in the embodiment shown in FIG 1 of which the reservoir tank 40 is divided into right and left parts, i.e., two tanks 40a, 40b, water reserved by connecting the neighborhood of the lower ends of the two tanks 40a, 40b with a communicating pipe 41 can be flown between the both tanks 40a, 40b so that the water level of the both tanks 40a, 40b is equalized. Furthermore, referring to the embodiment shown in FIG 1, the water level in the reservoir tank 40 can be observed from the outside by providing the water gauge 44 composed of pipes located in a vertical direction to the connecting pipe 41. The water gauge 44 is formed by the tube which can be seen the inside through, for example a transparent plastic tube or the like for observing the water level in the pipe. In addition, the water gauge may be composed by inserting a float in the tube as a mark for checking the water level as required.

Apertures 43, 43 are formed on an upper surface 42 of each tanks of both sides, 40a, 40b of the reservoir 40 which is made as previously mentioned. Thereby, sprayed water which sucks smoke or odor through the apertures 43, 43 and clean air of which smoke or odor is removed are introduced in the reservoir 40 then air introduced in the reservoir 40 can be sucked and exhausted by suction with a ventilator 90. It can be achieved by opening the lower end of the communicating duct 20 mentioned later communicated to the lower end of the suction unit 10 in the reservoir tank 40 through said aperture 43 and also by opening the exhaust duct 30 mentioned later communicated to a suction side of the ventilator 90 in the reservoir tank 40 through said aperture 43.

### A communicating duct and an exhaust duct

On the embodiment shown in FIG 1, a connecting chamber 60 with a shape of which a lower end of the suction unit 10 is extended is formed between said suction unit 10 and the reservoir 40 (40a, 40b) and the exhaust duct 30 which exhausts air in the reservoir 40 (40a, 40b) in a space surrounded by a partition 31 is formed by partitioning the inside of the connecting chamber 60 with the partition 31 then the communicating duct 20 communicated between the suction chamber 11 and the reservoir 40 (40a, 40b) is formed at the other part of the connecting chamber 60. In the case that the reservoir 40 is divided into right and left, i.e., two tanks 40a and 40b, the lower end of the connecting chamber 60 located between the tanks 40a and 40b is covered with a base plate 32 so that the exhaust duct 30 is opened only to the reservoir 40. In above mentioned embodiment, the connecting chamber 60 is divided with the partition 31 having a top portion 31a in which a center is a top position and both side are inclined to downwardly and vertical portions 31b, 31b arranged to the vertical direction at both the end of the top portion 31a. A exhaust duct 30 is formed in a space surrounded by the partition 31 and by the other space of the connecting chamber 60, the communicating duct 20 is formed for communicating between the suction chamber 11 and the reservoir tank 40 (40a, 40b).

In addition, the top portion 31a of the partition 31 may be formed for connecting for example between the upper end of the vertical portion 31b and a side wall 61 of the connecting chamber 60 which is parallel to the vertical portion 31a. The exhaust duct 30 may be formed in the space partitioned with the partition 31 and the side wall 61 by partitioning the connecting chamber 60 with the partition 31 formed as previously mentioned. The top portion 31a of the partition 31 is inclined toward the communicating duct 20 formed in the connecting chamber 60 downwardly and if sprayed water fallen through the screen 15 is fallen on the top portion 31a, the water is guided to inclination of the top portion 31a then fallen in the communicating duct 20. It may be provied a gutter which collects sprayed water fallen onto the top portion 31a and guides the same toward the communicating duct 20, in addition, the top portion 31a itself may be suitably formed into a semi-circular curved gutter at a cross section of a lateral direction so that sprayed water fallen onto the top portion 31a is guided toward the communicating duct 20.

In the present embodiment, the screen 25 comprising of for example, a punching metal or a wire netting or the like and divides the communicating duct 20 into upper and lower parts is provided on the communicating duct 20 formed in the connecting chamber 60 as mentioned above. The communicating duct 20 is divided into upper and lower parts by the screen 25, the branch pipe 73 branched from said conduit 72 is extended in an upper part of the divided space 20a, 20b of the communicating duct 20, i.e., the space 20a near the suction unit 10 then the injection nozzle 75 is installed in the lower end of the branch duct 73, thereby water can be sprayed. As mentioned above, moke or odor still mixed in the air when water is passed in the communicating duct 20 is removed by providing the injection nozzle 75 which sprays water and the screen 25 in the communicating duct 20, thereby only clean air is introduced in the reservoir 40 (40a, 40b).

The exhaust duct 30 formed in a space partitioned by said partition 31 is opened from an upper part of the reservoir 40 (40a, 40b) to water surface, thereby, waterdrop fallen through the communicating duct 20 is hard to be sucked. Especially, in the example shown in FIG. 1, a vertical portion 31b of the partition 31 is protruded in the reservoir 40 (40a, 40b) and a baffle board is formed between apertures 33, 33 of the lower end of the exhaust duct 30 and apertures of the lower end of the communicating duct thereby waterdrop fallen through the communicating duct 20 is hard to be sucked in the exhaust duct 30. The ventilator 90 is installed in the exhaust duct 30. By connecting the exhaust side of the ventilator 90 with an exhaust pipe 91 opened for example to the outdoors, when the ventilator 90 is revolved, air in the exhaust duct 30 is sucked then exhausted for example to the outdoors.

### A storage pump

In the smoke exhausting device 1 of the present invention, a storage pump 50 is provided for supplying water as a suction medium reserved in a reservoir tank 40 (40a) to the injection nozzle 75 if it is provided in the communicating duct 20 as well as the injection nozzles 74, 74 in the suction chamber 11. In the embodiment shown in FIG 1 having the reservoir tank 40, two tanks 40a, 40b, a suction side of the storage pump 50 is communicated with a piping which is opened at the neighborhood of a base in at least one tank 40a (or 40b) and the conduit 72 communicating to said injection nozzles 74, 74, 75 is connected with an exhausting side of the storage pump 50.

On the embodiment of FIG 1, a pipe joint 76 dividing the exhausting side of the storage pump 50 into two directions is provided, the drain pipe 71 branched from said conduit 72 is provided, on-off valves 77, 78 are provided on the drain pipe 71 and the conduit 72 respectively then any of the on-off valves 77, 78 is opened or shut selectively, thereby, water is sprayed from the injection nozzles 74, 74, 75 or water in the reservoir 40 can be discharged through the drain pipe 71. Water in the reservoir 40 may be drained by providing a drain pipe or the like which communicates with the reservoir 40 directly without passing through the storage pump 50 separately then opening or shutting the on-off valves provided on the drain pipe. Therefore, the constitution is not restricted to said embodiment shown in FIG. 1.

### Operation of a smoke exhausting device

An operation of a smoke exhausting device of the present invention having the suction unit 10, the reservoir 40, the communicating duct 20 connecting between the suction unit 10 and the reservoir 40, the exhaust duct 30 communicated to the ventilator 90 and the storage pump 50 which supplies water as a suction medium to the injection nozzle 74 arranged in the suction unit 10 will be explained below:
The smoke exhausting device 1 may be united with a worktop 80 of which a gas cooker or the like is put as shown in FIG 1 and said each appliances may be embedded in an inside wall facing with an arrangement position of food processing means in a house. First of all, an operator closes a on-off valve 77 of the drain pipe 71 by operating the on-off valves 77, 78 provided on the exhausting side of the storage pump 50 by dint of opening the front doors 83, 83 formed on the worktop and he confirms an opening position of the on-off valve 78 of a side of the conduit 72 and whether the water level in the reservoir tank 40 is within a predetermined height, thereby preparation for starting the smoke exhausting device 1 is completed. Then, in the above status, said ventilator 90 and the storage pump 50 are started by operating for example a switch 82 provided on a front face of the worktop 80, thereby, the smoke exhausting device 1 is started. Water, i.e., a suction medium for smoke or odor or the like is sprayed in the suction chamber 11 of the suction unit 10 by pumping water with the storage pump 50 and the inside of the exhaust duct 30 becomes negative pressure by rotating said ventilator 90 then the insides of the reservoir tank 40 (40a, 40b), the communicating ducts 20, 20 and the suction 11 which are communicated to the exhaust duct 30 become negative pressure consequently, thereby air including smoke or odor generated by using food processing means or the like put on the worktop 80 is sucked through the inlet port 12 communicated to the suction chamber 11.

When air including smoke or odor sucked through the inlet port 12 passes in a film of water sprayed in the suction chamber 11 through the injection nozzles 74, 74, smoke or odor included in the air is sucked in the waterdrop by contacting with sprayed water. Water sprayed in the suction chamber 11 is fallen in the suction chamber 11 downwardly then adhered to the screen 15 partitioning the lower end of the suction chamber 11, then a part of sprayed water forms a water film by sealing ports or a meshes formed on the screen 15 then the other sprayed water is fallen via the screen 15, fallen in the communicating duct 20 directly or along the worktop 31a of the partition 31 and fallen in the communicating duct 20 downwardly. On the other hand, air in the suction chamber 11 is transferred to a direction of the communicating duct 20 by negative pressure caused by revolution of the ventilator 90. Then, smoke or odor still remained in the air is sucked in water forming the water film by being passed through the water film sealing ports and meshes formed on said screen 15, thereby, clean air is introduced in the communicating duct 20.

On the embodiment shown in FIG 1, the screen 25 partitioning the communicating duct 20 into upper and lower parts is provided in said communicating duct 20 and the branch pipe 73 branched from the conduit 72 is extended in the upper space 20a partitioned by the screen 25, then the injection nozzle 75 is provided at the point of the branch pipe 73, thereby water can be sprayed also in the communicating duct 20. In the above case, air from which smoke or odor is removed through the suction chamber 11 and the screen 15 defining the lower end of the suction chamber 11 is passed through the sprayed water again, and when passed through the screen 25 again, the smoke or odor is also passed through the water film sealing the meshes or the openings of the screen, then smoke or odor is removed. Therefore, only clean air of which smoke or odor is removed more completely introduced in the reservoir tank 40 (40a, 40b) communicated to the communicating duct 20.

In addition, waterdrop which sucked oil or odor is fallen and reserved in the reservoir tank 40 (40a, 40b). In this way, clean air introduced in the reservoir 40 (40a, 40b) is exhausted to the outdoors not shown through the exhaust duct 30, the ventilator 90 and the exhaust pipe 91 however, exhausted air contacting to the ventilator 90 or the like is clean air of which grease or odor is removed when passed through the suction chamber 11 and the communicating duct 20 as previously mentioned, therefore only clean air can be exhausted to the outdoors and the reservoir 40 (40a, 40b), the exhaust duct 30, the ventilator 90 and the exhaust pipe 91 or the like can be maintained cleanly without touching with oil or the like, thereby maintenance, i.e., cleaning or the like can be simplified.

As mentioned above, water reserved in the reservoir tank 40 (40a, 40b) with collecting grease or odor is used again as a suction medium by spraying from the injection nozzles 74, 75 through the conduit 72 and the branch pipe 73 connected with the storage pump 50, then water combined with grease or odor by using for preditermined term is exchanged with clean water. In such occasion, oil in the air sucked by water is lighter than water and floats near water surface, therefore, no oil is adhered to the storage pump 50 located at the bottom of the tank 40a and sucking water in the tank 40a, the conduit 72, the branch pipe 73 and nozzles 74, 75 and they don't clog even by using with circulating sprayed water.

### Embodiment 2

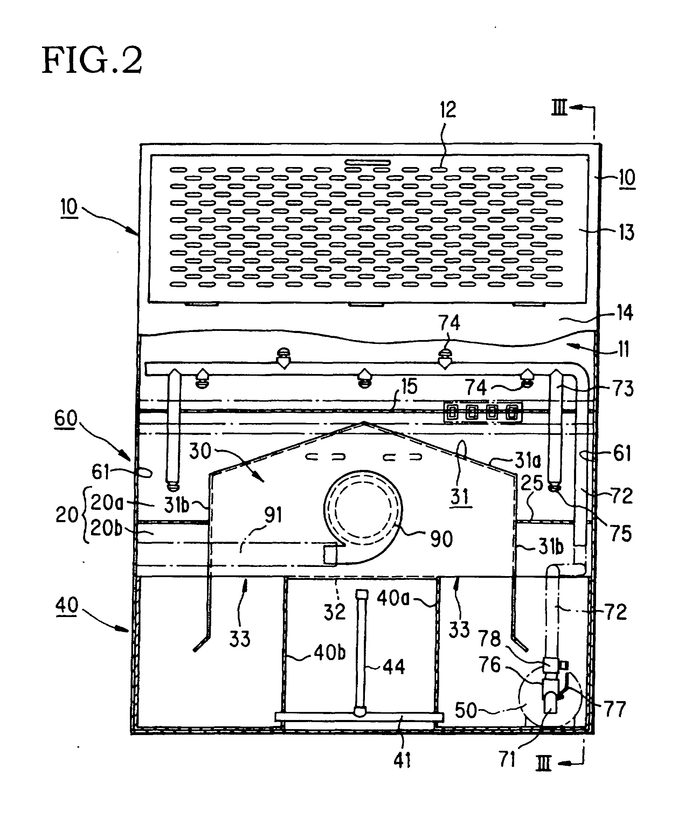

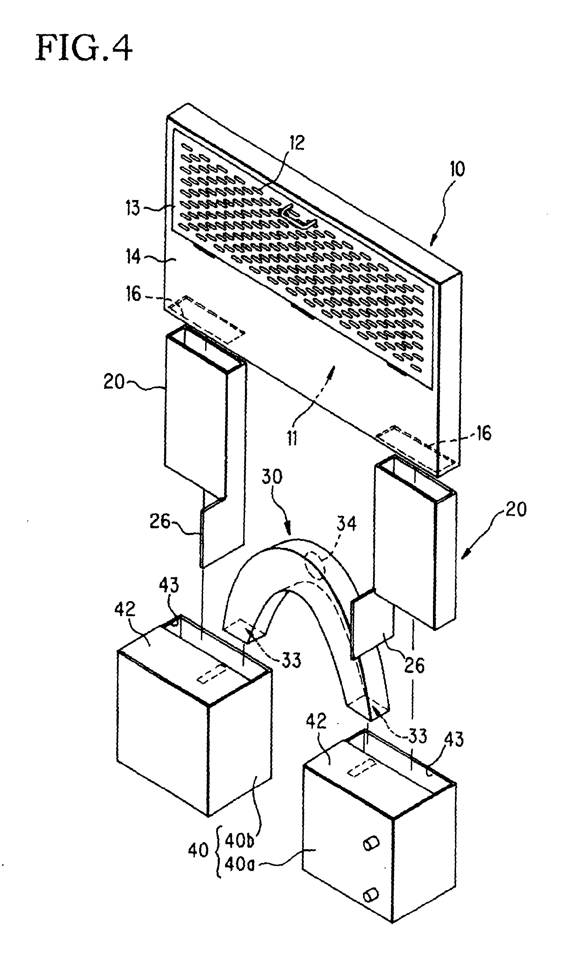

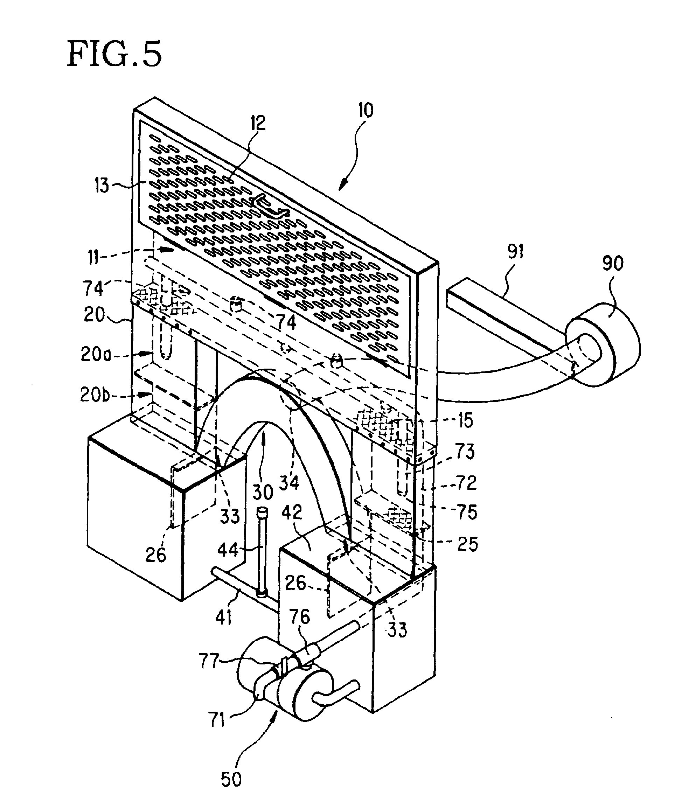

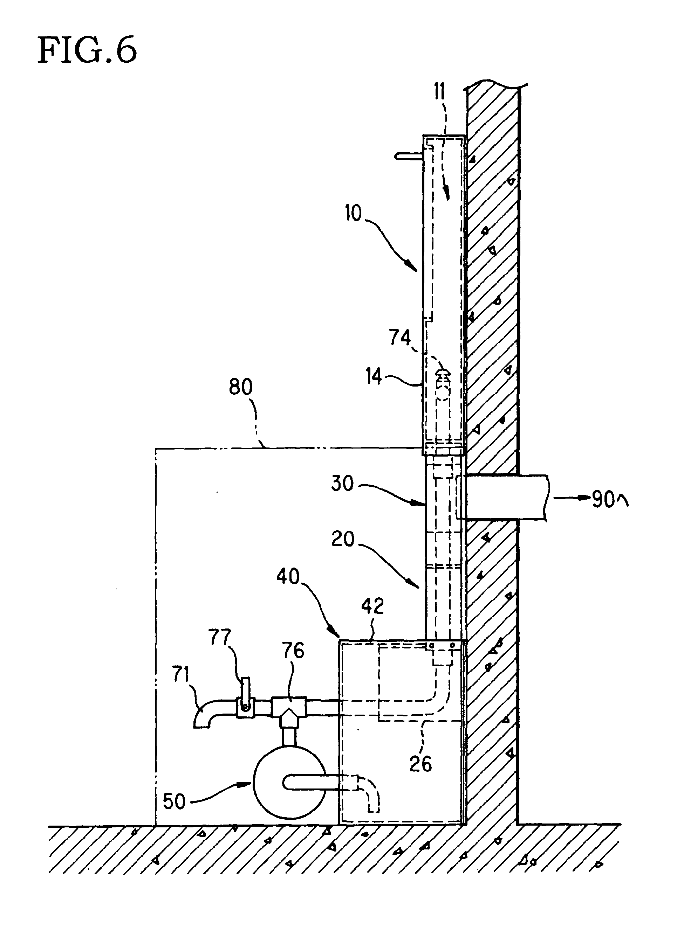

Then, referring to FIG 2 to FIG. 6, the other embodiments of the present invention will be described. In the embodiment shown in FIG 1 to FIG 3, the communicating duct 20 and the exhaust duct 30 are formed in the connecting chamber 60 of which the shape is that a lower end of the suction unit 10 is extended respectively by partitioning with the partition 31, however, referring to the embodiment shown in FIG 4 to FIG 6, said communicating duct 20 and the exhaust duct 30 are formed as independent members respectively then each of the suction unit 10, the communicating duct 20, the exhaust duct 30 and the reservoir 40 (40a, 40b) are formed decomposably, thereby, workability of the maintenance, i.e., cleaning or the like is improved.

In the above embodiment, upper ends of rectangular-cylindrical shape of the communicating ducts 20, 20 opened upper and below are connected with the communicating ports 16, 16 formed near the end of the base of the suction unit 10 and the lower ends of the apertures are connected with apertures 43, 43 formed on upper surfaces 42, 42 of the reservoir tank 40 (40a, 40b) and a conduite having almost inverse U-shaped exhaust duct 30 is arranged on a central position between the two communicating ducts 20, 20 and apertures 33, 33 formed on the lower end of the exhaust duct 30 are connected with apertures 43, 43 adjoined to the communicating ducts 20, 20 and formed on the upper surfaces 42, 42 of the tank so as to communicate ducts 20, 20 and the exhaust duct 30 to the reservoir tank 40 (40a, 40b) and each tanks 40a, 40b comprising the reservoir tank 40 arranged at the both sides are connected with each other.

A inlet side of a ventilator 90 is connected to an admission port 34 located almost at the center of the exhaust duct 30 whereby air in the reservoir tank 40 (40a, 40b) is exhausted through the exhaust duct 30 by operating a ventilator 90. The baffle boards 26, 26 are protruded downwardly in the reservoir tank 40 (40a, 40b) on adjoined one side to apertures 33, 33 of said exhaust duct 30 at lower ends of said communicating ducts 20, 20. By the baffle boards 26, 26, it is prevented waterdrop passed through the communicating ducts 20, 20 from being sucked in the exhaust duct 30 directly and adhered to the ventilator 90 or the like when air is sucked in the exhaust duct 30 by being sucked with the ventilator 90.

In FIG 4, an example of which the baffle boards 26, 26 are formed adjacent to the apertures of the lower ends of the communicating ducts 20, 20 as mentioned above, however, the baffle boards 26, 26 may be formed adjacent to the communicating ducts 20, 20 of the apertures 33, 33 formed at the exhaust duct 30. In addition, the baffle board formed apart from the communicating ducts 20, 20 and the exhaust duct 30 may be installed for example on the inner walls of the upper surfaces 42, 42 of the reservoir tanks 40a, 40b, therefore the constitution of the baffle boards is not restricted to the same shown in FIG 4, if the baffle boards 26, 26 is so protruded between downwardly the apertures 33, 33 of the exhaust duct 30 and the aperture of the lower end of the communicating ducts 20, 20.

In the smoke exhausting device 1 constituted as mentioned above, operation of the whole of the smoke exhausting device 1 is same as that of said smoke exhausting device 1 explained by reffering FIG 1 to FIG 3. In the smoke exhausting device 1 of the present embodiment, the communicating ducts 20, 20 and the exhausting duct 30 are formed as independent members respectively, in addition, the suction unit 10 and the reservoir tank 40 (40a, 40b) are formed as independent members respectively, thereby, cleaning, disassembly for maintenance, exchange of each part or the like can be simplified, and in addition, a located position to a longitudinal direction of the suction unit 10 can be changed by changing length of the communicating ducts 20, 20. Therefore, an arrangement place of the smoke exhausting device 1 of the present invention or the arrangement position to the longitudinal direction of the suction unit 10 can be changed easily by preparing plural kinds of the communicating ducts 20, 20 whose length are varied beforehand and installing the desired length of the one among the communicating ducts 20 selectively.

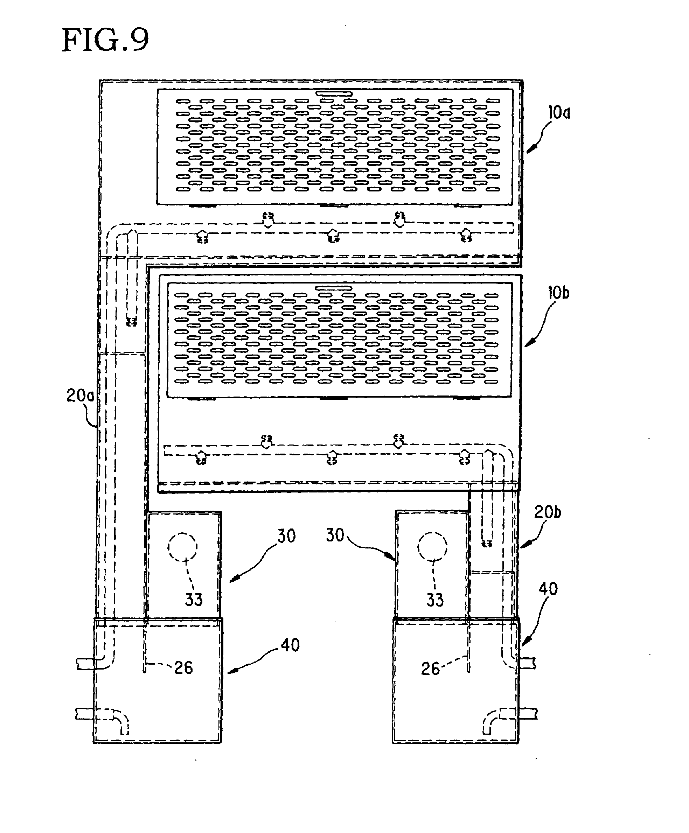

Further, the smoke exhausting device 1 of which plural suction units 10 are piled up vertically in multiple steps may be easily formed by changing the length of the communicating ducts 20, 20 as shown, for example, in FIG 9. When more large suction units 10a, 10b are required in accordance with the use, the smoke exhausting device 1 corresponding to various demands can be provided according to combination of common parts.

Referring to the embodiment shown in FIG 9, the communicating duct 20a connected with the suction unit 10a, i.e., one of the suction units 10a, 10b is formed longer for almost height of the suction unit 10b and arranged upper portion of the suction unit 10b, however, when the plural suction units 10a, 10b are used, the suction units may be located and arranged horizontally direction corresponding to the shape of using food processing means or the like.

In such case, for example, arrangement space between the reservoir tanks 40a, 40b may be broaden and the connecting duct 41 connecting between the tanks 40a, 40b may be lengthened, in addition, for example, the reservoir tank 40 may be composed by connecting three tanks. Therefore, the smoke exhausting device 1 corresponding to a using place, the use and the other various conditions can be provided easily according to combination of common parts in various ways.

### Embodiment 3

Referring to FIG 7 and FIG 8, the other embodiment of the present invention will be described below. In the above mentioned any embodiments as shown in FIG 1 to 3 and FIG 4 to FIG 6, the reservoir tank 40 is formed by connecting the two tanks 40a, 40b and the communicating ducts 20, 20 communicating between the reservoir tank 40 (40a, 40b) and the suction unit 10 are arranged by dividing into right and left side, then the exhaust duct 30 is arranged between them. However, in the present embodiment, the reservoir tank 40 is united without being divided into two chambers without dividing and an upper central part of the reservoir tank 40 is connected with the suction unit 10 through one communicating duct 20 and two exhaust ducts 30, 30 are arranged at both sides of the communicating duct 20.

The admission ports 34, 34 formed on the exhaust ducts 30, 30 are communicated to the ventilator 90, thereby air in the reservoir 40 can be sucked through two admission ports 34, 34. In addition, baffle boards 26, 26 projected downwardly next to two sides adjoined to the apertures 33, 33 of the suction ducts 30, 30, i.e., the lower end of said communicating duct 20 are provided, thereby waterdrop fallen through the communicating duct 20 is prevented from being sucked in the exhaust ducts 30, 30 directly with the baffle board 26, 26. Further, the baffle boards 26, 26 may be formed adjacent to the lower end of the suction ducts 30, 30, in addition, same as the smoke exhausting device 1 of the embodiment explained by referring said FIG 4 to FIG 6, the baffle boards 26, 26 formed apart from the communicating duct 20 and the exhaust ducts 30, 30 may be formed by installing in the inner wall of the upper surface 42 of the reservoir 40 or the like.

### The other embodiment

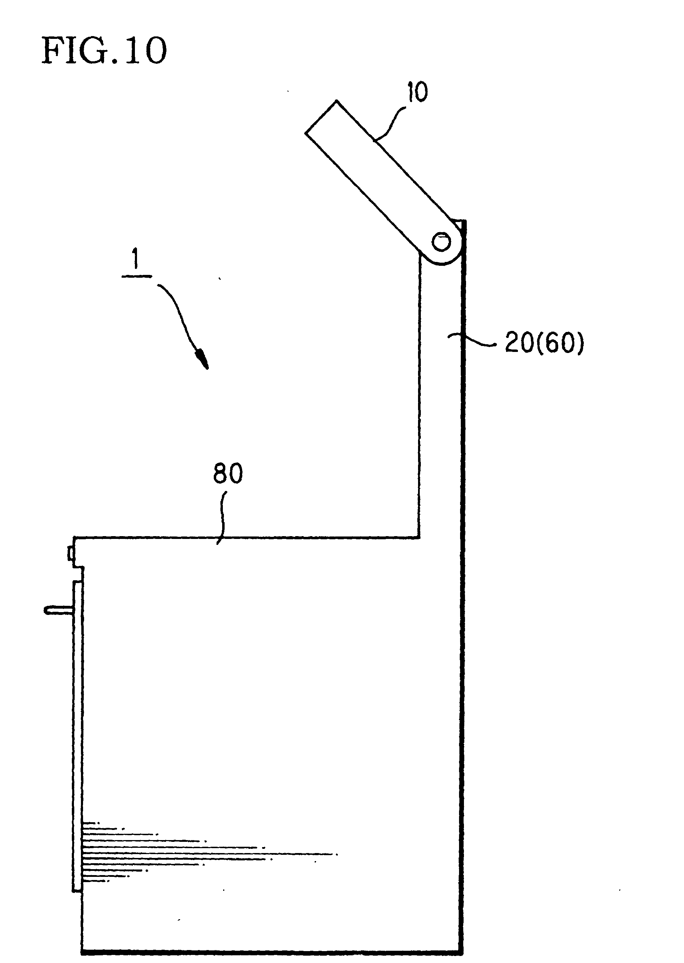

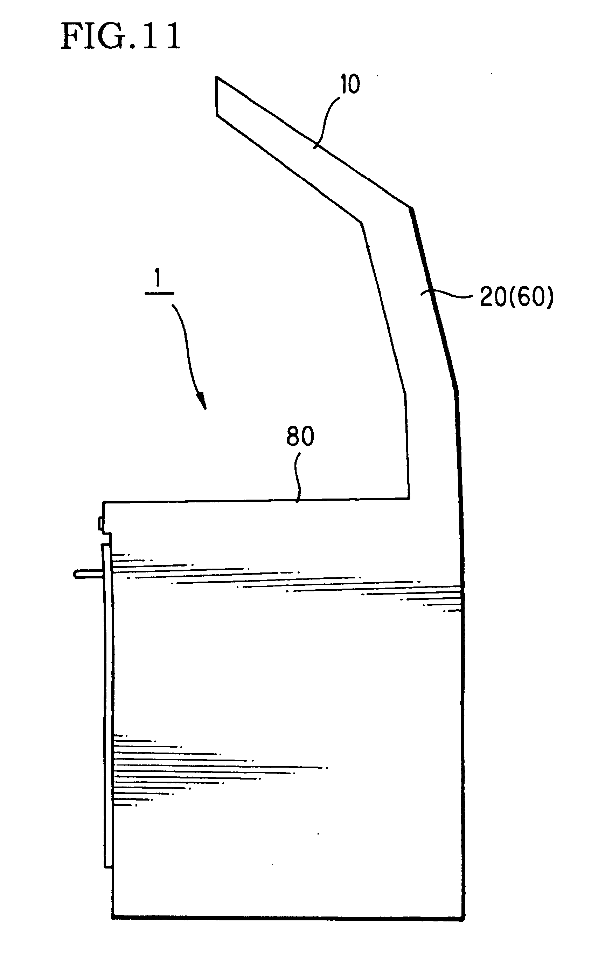

Referring to FIG 1 to FIG 9, the smoke exhausting device 1 is shown that the suction unit 10 is stood vertically, however, the smoke exhausting device of the present invention may be composed by inclining the suction unit 10 to the worktop 80 as shown in FIG 10 and FIG 11. Thereby, smoke exhausted from the food processing means put on the worktop 80 upwardly can be collected more easily. In such case, for example, inclined angle of the suction unit 10 may be fixed as shown in FIG 11, in addition, the inclined angle of the suction unit 10 may be adjusted to the desired angle by being operated by the user by supporting the suction unit 10 at the fixed position so as to be pivoted freely as shown in FIG 10.

In the case that the inclined angle of the suction unit 10 is adjustable as shown in FIG 10, the suction unit is constituted so as not to be leaked water sprayed in the suction chamber 11 formed in the suction unit 10 through the inlet port 12 formed on the aperture 13. For example, a stopper not shown which controls shift of the suction unit 10 is provided so that the suction unit 10 is not inclined over the fixed inclined angle, or the suction unit 10 is composed so as to be bent at an upper space of the position arranged said injection nozzles 74, 74, thereby, water sprayed in the suction unit 10 is not leaked to the outside through the apertures 13 according to the inclination.

By the composition mentioned above, the smoke exhausting device of the present invention can exhaust clean air of which smoke or odor is removed and each of the exhaust duct and the ventilator or the like is hard to be dirtied thereby the smoke exhausting device of which maintenance. i.e., cleaning or the like is simplified can be provided. In addition, the smoke exhausting device of which workability of disassembly for cleaning, repair and the other maintenance and workability for exchanging of each part or the like can be improved drastically can be provided by forming each part, i.e., the suction unit, the communicating duct, the reservoir tank and the ventilator or the like as independent parts. Furthermore, the smoke exhausting device corresponding to the use or the other purpose of use can be provided easily by changing or exchanging each part according to the food processing means arranged nearby, an arrangement place, a using condition and the other condition and changing the combination by dint of using common parts.

Thus, the broadest claims that follow are not directed to a machine that is configuration a specific way. Instead, said broadest claims are intended to protect the heart or essence of this breakthrough invention. This invention is clearly new and useful. Moreover, it was not obvious to those of ordinary skill in the art at the time it was made, in view of the prior art when considered as a whole. Moreover, in view of the revolutionary nature of this invention, it is clearly a pioneering invention. As such, the claims that follow are entitled to very broad interpretation as to protect the heart of this invention, as a matter of law. It will thus be seen that the objects set forth above, and those made apparent from the foregoing description, are efficiently attained. Also, since certain changes may be made in the above construction without departing from the scope of the invention, it is intended that all matters contained in the foregoing description or shown in the accompanying drawings shall be interpreted as illustrative and not in a limiting sense. It is also to be understood that the following claims are intended to cover all of the generic and specific features of the invention herein described, and all statements of the scope of the invention which, as a matter of language, might be said to fall therebetween. Now that the invention has been described;

### EXPLANATION OF REFERENCE NUMERALS

- 1: a smoke exhausting device
- 10: a suction unit
- 11: a suction chamber
- 12: an inlet port
- 13: an aperture
- 14: a front plate
- 15: a screen
- 16: a communicating port
- 20,20a,20b: communicating ducts
- 25: a screen
- 26: a baffle board
- 30: an exhaust duct
- 31: a partition
- 31a: a top portion
- 31b: a vertical portion
- 32: a base plate
- 33: an aperture
- 34: an admission port
- 40(40a,40b): a reservoir tank
- 41: a communicating pipe
- 42: a top face (of a tank 40 or 40a, 40b)
- 43: an aperture
- 44: a water gauge
- 50: a storage pump
- 60: a connecting chamber
- 61: a side wall
- 71: a drain pipe
- 72: a conduit
- 73: a branch pipe
- 74,75: injection nozzles
- 76: a pipe joint
- 77,78: an on-off valve
- 80: a worktop
- 82: a switch
- 83: a front door
- 90: a ventilator
- 91: a drain pipe

## Claims

1. A smoke exhausting device comprising:
a suction chamber communicated to an inlet port and equipped with injection nozzles spraying fluid suction medium (for example, water)for sucking smoke or odor in air, and
a reservoir tank is/are provided which is/are communicated to the bottom of the suction chamber, reserving the suction medium sprayed form said injection nozzles and introducing air passed through said chamber therein,
a screen of which numerous small openings are formed thereon divides between said suction chamber and said reservoir tank and
an exhaust duct 30 exhausting air in said reservoir tank by being connected with a ventilator is located and opened above a surface of the fluid in said reservoir tank, and the smoke exhausting device
further comprising:
the connecting chamber is formed by extending the lower end of said suction chamber to an upper surface of said reservoir tank, and
the inside of the connecting chamber is defined with a partition comprising of plural vertical portions and a top portion connecting between the upper ends of said vertical portions, and
a space surrounded by said partition is provided as said exhaust duct, and
the communicating duct is formed so as to communicate between said suction chamber and said reservoir tank by the other portions in said connecting chamber.

2. A smoke exhausting device according to Claim 1 wherein a top portion of said partition is inclined downwardly to said communicating duct.

3. A smoke exhausting device according to Claim 2 wherein vertical portions of said partition are extended downwardly then protruded in said reservoir tank.

4. A smoke exhausting device according to any one of claim 2 to 3 wherein a gutter not shown may be provided on the top portion of said partition and the gutter of which inclined downwardly to said communicating duct

5. A smoke exhausting device according to Claim 1 wherein a suction unit which defines said suction chamber, said reservoir tank, a communicating duct communicating between said suction chamber and said reservoir tank and of said exhaust duct are formed as decomposable independent members.

6. A smoke exhausting device according to Claim 5 wherein said communicating duct is selected among plural kinds of the same whose length is varied according to the arrangement height of said suction unit.

7. A smoke exhausting device according to claim 5 or 6, wherein a plurality of said suction units are arranged longitudinally.

8. A smoke exhausting device according to any one of claim 1 to 7, wherein said communicating duct is divided into upper and lower parts with a screen of which plural small openings are formed thereon.

9. A smoke exhausting device according to Claim 8, wherein another injection nozzle spraying fluid suction medium in said communicating duct is provided on the upper space of the screen dividing said communicating duct.
